# EUROPEAN PATENT SPECIFICATION

(11) **EP 0 565 230 B1**
(45) Date of publication and mention of the grant of the patent: **12.12.2001**
(21) Application number: 93301637.0
(22) Date of filing: 04.03.1993
(51) Int. Cl.: H04L 12/06, H04L 29/06, H04L 12/28, H04M 11/06

(54) **Method and system for automatic modem protocol selection in a cellular communications system**
Verfahren und Anordnung für die automatische Modem-Protokoll-Auswahl in einem cellularen Übertragungssystem
Méthode et système pour sélection automatique de protocole de modem dans un système de communication cellulaire

(30) Priority: 30.03.1992 US 860611
(43) Date of publication of application: 13.10.1993
(73) Proprietor: International Business Machines Corporation, Armonk, N.Y. 10504 (US)
(72) Inventor: Brigida, David Joseph, Boca Raton, Florida 33434 (US); Moore, Victor Stuart, Delray Beach, Florida 33484 (US); Robinson, James Edward, Boca Raton, Florida 33433 (US)
(74) Representative: Burt, Roger James, Dr.

(56) References cited:
- EP-A- 0 344 539
- EP-A- 0 473 297
- US-A- 4 697 281
- US-A- 4 972 457

## Description

### 1. Technical Field:

The present invention relates in general to improved communications in a distributed data processing system and in particular to a method and system for optimizing communications in a distributed data processing system by means of a cellular communication system. Still more particularly the present invention relates to a method and system for automatic optimum modem protocol selection in a cellular communications system.

### 2. Description of the Related Art:

Distributed data processing systems are increasingly common in the modern electronic work place. Such distributed data processing systems may include thousands of computers or workstations including mainframe computers, so-called "personal" computers and modern state-of-the-art portable or "laptop" computers. In modern distributed data processing systems many such computers may be linked together utilizing various topologies in different types of networks including Advanced-Peer-To-Peer-Networks (APPN), Local Area Networks (LAN) or various other types of networks. While in the past computer networks are generally coupled together utilizing existing telephone landline systems or specialized wiring, modern distributed data processing systems often utilize more sophisticated means of communication.

For example, the increasing efficiency and decreasing cost of cellular communication equipment has resulted in the utilization of that technology to couple together multiple computers without the necessity of access to a telephone line outlet. This particular technology is particularly effective in combination with small, portable battery powered laptop or notebook computers in which the necessary modem and cellular communications circuitry are miniaturized and provided in an integral fashion with the computer itself. Thus, an operator utilizing such a computer may initiate communications and transfer data between his or her computer and a distributed data processing system without the necessity of access to either telephone lines or power lines.

Additionally, the devices by which two computers may communicate, typically referred to as "modems" are also growing increasingly sophisticated. For it is possible to increase the speed of data exchanged utilizing data compression algorithms. Indeed, certain modern modems known as MNP modems are capable of altering the speed at which data is exchanged in order to compensate for variations in the quality of the communications link between the two modems. However, in order to optimize communication between two computers utilizing such sophisticated technology, both the sending and receiving computer must utilize a modem which is equipped for such operation.

Examples of communication example, modern modems are typically capable of engaging in multiple protocols including error control protocols. Additionally, when communicating between two computers having highly sophisticated modems, systems utilizing such sophisticated technology are described in EP-A-0473297 and in EP-A-0344539.

While modern error/detection/correction and data compression techniques are often utilized in sophisticated modems, the systems typically included within laptop or notebook computers do not generally support these features. This is unfortunate due to the fact that the cellular communications channel often varies dramatically in quality. Protocols fall into two broad categories. Those that concern the transmission of bit streams across a channel. These are called physical layer protocols. The other category concerns protocols called link layer protocols, which provide error free delivery of data across the channel. This invention deals with physical layer protocols. Most modems within laptop or notebook computers support the V.22bis or V.22 protocols adapted by the Consultive Committee for International Telephone and Telegraph (CCITT) detection. Typically, the initiation of communication between two modems which support these protocols is generally attempted at the highest possible data rate V.22bis; however, upon a failure to connect at that date rate V.22 the lower data rate will be selected.

### SUMMARY OF THE INVENTION

It is therefore one object of the present invention to provide an improvement in communications in a distributed data processing system.

The method and system of the present invention, according to the features of claims 1 and 2, respectively, may be utilized to automatically select an optimum modem physical layer protocol in a distributed data processing system which includes a modem which supports multiple physical layer protocols which is coupled to a cellular communications system. Known cellular communications systems generate a Received Signal Strength Indicator (RSSI) and a Service Access Tone (SAT) which may be utilized by a cellular telephone to determine the amplitude of a received signal and to optimize a path through the cellular communication system for voice communications. The Service Access Tone (SAT) is generally utilized to control the "hand off" of a communication session to a new cell and provides an indication of the quality of the existing path through the cellular communication system. After initiating communication between a first modem and a second modem, the method and system of the present invention automatically determines the channel quality within the cellular communication system preferably by utilizing the Received Signal Strength Indicator (RSSI) and the Service Access Tone (SAT). These signals may be analyzed, in conjunction with the bit error rate of the dotting sequence transmitted by the answering modem, to achieve an indication of the quality of the cellular communications channel. In response to an analysis of these factors a particular physical layer protocol may be selected which is optimum for existing channel conditions.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a partially schematic pictorial representation of a distributed data processing system which may be utilized to implement the method and system of the present invention;
Figure 2 is a partial high level block diagram of a computer within the distributed data processing system of Figure 1 which may be utilized to implement the method and system of the present invention; and
Figure 3 is a high level logic flowchart which depicts the automatic selection of an optimum modem protocol in accordance with the method and system of the present invention.

### DETAILED DESCRIPTION OF PREFERRED EMBODIMENT

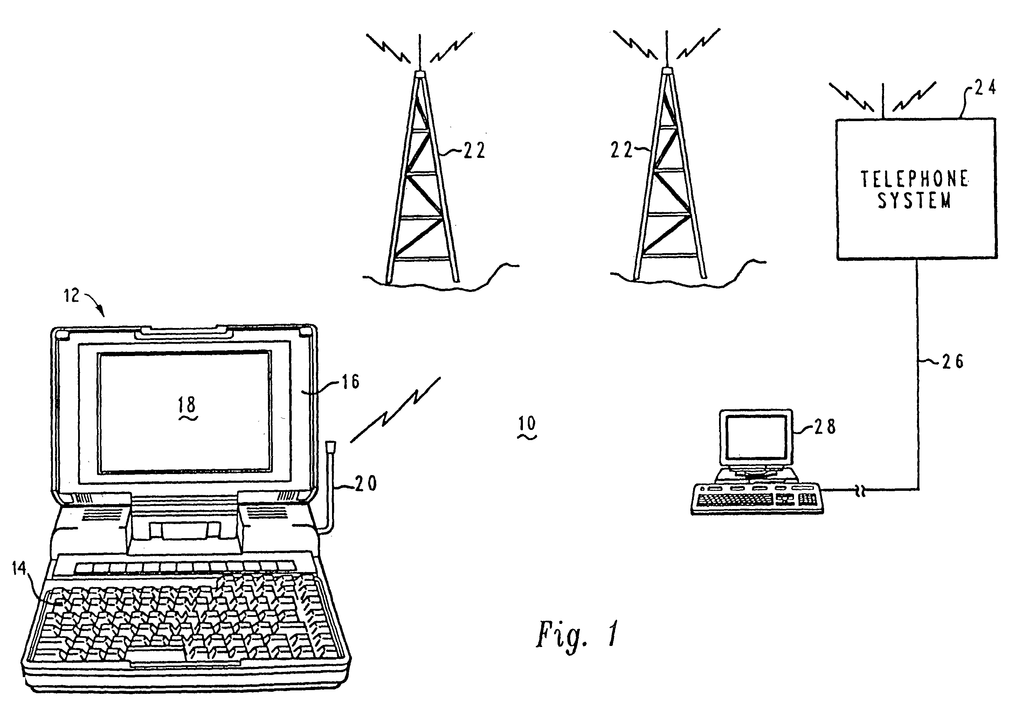

With reference now to the figures and in particular with reference to Figure 1, there is depicted a partially schematic pictorial representation of a distributed data processing system 10 which may be utilized to implement the method and system of the present invention. Upon reference to the foregoing those skilled in the art will appreciate that while distributed data processing system 10 is illustrated as including only two computers, typically such distributed data processing systems include a large number of computers distributed over a wide geographic area. As illustrated, one of the computers within distributed data processing system 10 is a portable computer 12. Portable computer 12 is typically a battery powered computer which includes a low power display system 16 which preferably provides a display screen 18 which may be implemented utilizing a liquid crystal displays (LCDS), a gas plasma display or any other suitable technology. The keyboard 14 is provided which enables the user to access and modify data stored within portable computer 12 in a manner well known in the art.

As those skilled in the art will appreciate, it is increasingly common for computers such as portable computer 12 to include therein a miniature cellular telephone system (not shown) which is provided in conjunction with a modem. One example of a portable computer equipped with a combination modem/cellular telephone which may be utilized to implement portable computer 12 is the International Business Machines Corporation Model 9075 PC radio. Those skilled in the art will appreciate that a modem is a device which may be utilized to convert digital data from a computer to an analog signal which may be transmitted via a telecommunications system. Additionally, such devices convert received analog signals from the telecommunications line to digital data which may be utilized by a computer. As is typical in such systems, a cellular telephone transmits a radio frequency signal via antenna 20 which may be received and relayed via multiple cellular system antennae 22. Thus, digital data within portable computer 12 may be converted into a series of analog signals and transmitted, via a cellular telephone system and multiple intervening repeaters to a telephone system 24, in a manner well known to those skilled in this art.

Analog signals thus transmitted may be received by the telephone system and transmitted, via an ordinary telephone land line 26 to a computer 28 within distributed data processing system 10. While computer 28 is depicted as a personal computer, those skilled in the art will appreciate that computer 28 may be implemented utilizing a workstation, terminal or mainframe computer, as desired. Typically, computer 28 will also include a modem device permitting data from portable computer 12 to be transmitted to and received by computer 28 and computer 28 may also be linked to portable computer 12 utilizing cellular technology, rather than telephone land lines.

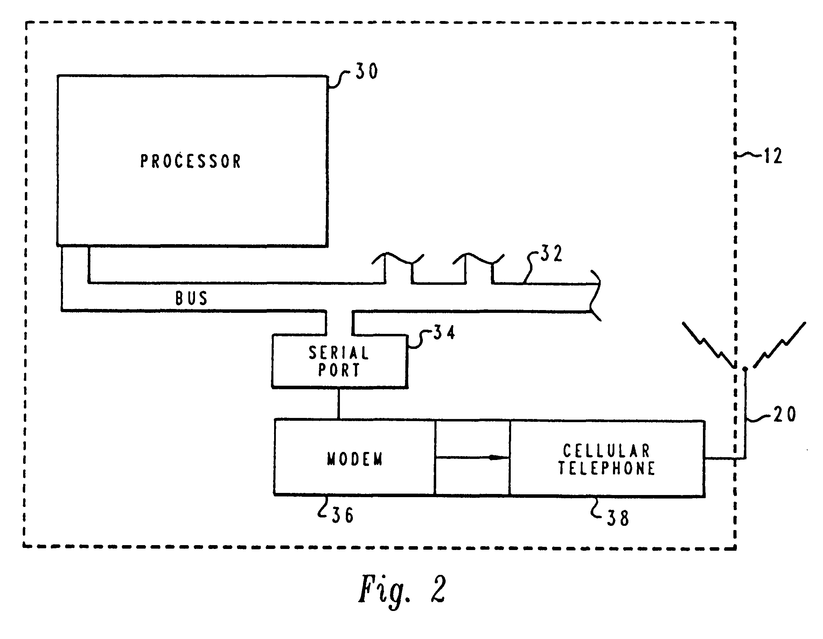

Referring now to Figure 2, there is depicted a partial high level block diagram of portable computer 12 within distributed data processing system 10 of Figure 1 which may be utilized to implement the method and system of the present invention. As illustrated, portable computer 12 preferably includes a processor 30 which is coupled to a bus 32. Serial port 34, coupled to bus 32, is utilized to serialize data from processor 30 and couple that data to modem 36. Modem 36, as described above, converts that data into a series of analog signals which are coupled to cellular telephone 38 and transmitted, via antenna 30 in the manner described above. Of course, those skilled in the art will appreciate that in a modern miniature portable computer modem 36 and cellular telephone 38 may be implemented utilizing a single subassembly within portable computer 12.

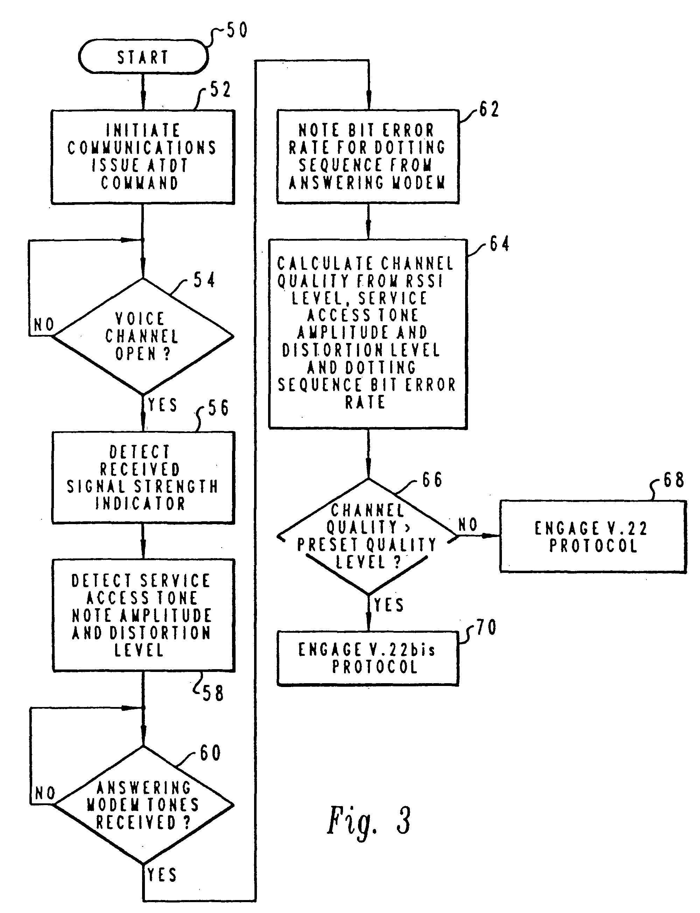

With reference now to Figure 3, there is depicted a high level logic flowchart which illustrates the automatic selection of an optimum modem physical layer protocol in accordance with the method and system of the present invention. As illustrated, the process begins at block 50 and thereafter passes to block 52. Block 52 illustrates the initiation of communication by portable computer 12 utilizing cellular telephone 38 (see Figure 2) and typically begins, by the issuance of a so-called "ATDT" command, in a Hayes compatible modem equipped system. Thereafter, the process passes to block 54. Block 54 illustrates a determination of whether or not a voice channel has been opened, and if not, the process merely waits until such time as the voice channel has been opened or the application has been terminated.

After a voice channel is open, as depicted at block 54, the process passes to block 56. Block 56 illustrates the detecting of the Received Signal Strength Indicator (RSSI), a signal typically utilized by existing cellular telephone systems as an indication of communications channel quality. Received Signal Strength Indicator (RSSI) is utilized as a representative of the amplitude of the signal and represents the fade margin of the channel. That is, the extent to which a signal may change in amplitude before adversely affecting communication. This information is stored and the process then passes to block 58. Block 58 illustrates the detection of the Service Access Tone (SAT) described above, noting the amplitude and distortion level of that signal. The Service Access Tone (SAT) is a tone transmitted by existing cellular communications system to aid in determining the path quality for voice communication attempts. When the Service Access Tone (SAT) deteriorates below a specific level the cellular communications system begins a so-called "hand-off" procedure to determine if another cell within the cellular communications system is receiving the respective cellular telephone at a higher Service Access Tone (SAT) quality level. If this condition exists, the cellular phone system will "hand-off" the communication session in question to the new cell. By accessing and analyzing the Service Access Tone (SAT) for distortion and amplitude another measure of the quality of the communications channel in use within the cellular communication system may be provided.

Next, the process passes to block 60 which illustrates a determination of whether or not the answering modem has generated a series of tones in a so-called "dotting" sequence. If not, the process merely waits until such time as those tones are received or the communications attempt is aborted. Upon receiving the dotting sequence tones from the answering modem, the process passes to block 62. Block 62 illustrates the noting of the bit error rate for the dotting sequence from the answering modem. Those skilled in the communications art will appreciate that a bit error rate may be calculated for any attempted communication in a telecommunications system.

Thereafter, a channel quality factor is calculated, in the depicted embodiment of the present invention, from the Received Signal Strength Indicator (RSSI), the Service Access Tone (SAT) amplitude and distortion level and the bit error rate for the received dotting sequence. Of course, those skilled in the art will appreciate that a greater or fewer number of channel quality factors may be analyzed and that these factors may be assigned various weights based upon experience in a particular communication system.

Thereafter, the process passes to block 66. Block 66 illustrates a determination of whether or not the channel quality, as calculated above, is greater than a preset quality level. If so, the process passes to block 70 which illustrates the engaging of the V.22bis protocol, the highest communication rate protocol typically supported by modems in such systems. However, in the event the channel quality does not exceed the preset quality level, the process passes to block 68, which illustrates the automatic engaging of the V.22 protocol, a lower data rate protocol which may be optimally utilized in channels wherein the communications quality may suffer.

Upon reference to the foregoing those skilled in the art will appreciate that the Applicants herein have provided a novel improvement to distributed data processing system communications wherein an optimum protocol may be selected for communication between a portable computer and a distributed data processing system utilizing a cellular communication system without requiring sophisticated modem devices to be utilized by both the transmitter and the recipient. By analyzing the channel quality in the cellular communication system the optimum protocol for the modem may be automatically selected and communication efficiency greatly enhanced.

## Claims

1. A method for automatic modem protocol selection in a distributed data processing system (10) wherein said modem (36) calculates a bit error rate from a received dotting sequence and, supports multiple protocols and is coupled to a cellular communication system (20, 22, 24), said cellular communication system including a Received Signal Strength Indicator and a transmitted Service Access Tone which are utilized to control communication sessions within said cellular communication system, said method comprising the steps of:
- initiating communications through said cellular communication system (20, 22, 24);
- prior to establishing communications utilizing any of said multiple protocols, determining channel quality within said cellular communication system (20, 22, 24) utilizing said calculated bit error rate in combination with said Received Signal Strength Indicator and an amplitude and distortion level of said Service Access Tone;
- in response to said determined channel quality, selecting a particular one of said multiple protocols; and
- establishing communications through said cellular communications system (20, 22, 24) utilizing only said selected protocol such that unsuccessful attempts at establishment of communication utilizing the other protocols are eliminated.

2. An automatic modem protocol selection system for use in a distributed data processing system (10) having a modem (36) which calculates a bit error rate from a received dotting sequence and which supports multiple protocols coupled to a cellular communication system (20, 22, 24), said cellular communication system including a Received Signal Strength Indicator and a transmitted Service Access Tone which are utilized to control communication sessions within said cellular communication system, said automatic modem protocol selection system comprising:
- means for initiating communications through said cellular communication system (20, 22, 24);
- means for determining channel quality within said cellular communication system (20, 22, 24) utilizing said calculated bit error rate in combination with said Received Signal Strength Indicator and an amplitude and distortion level of said Service Access Tone prior to establishing communications utilizing any of said multiple protocols;
- means for selecting a particular one of said multiple protocols in response to said determined channel quality; and
- means for establishing communications through said cellular communications system (20, 22, 24) utilizing only said selected protocol such that unsuccessful attempts at establishment of communication utilizing the other protocols are eliminated.

## Patentansprüche

1. Verfahren zur automatischen Modem-Protokoll-Auswahl in einem verteilten Datenverarbeitungssystem (10), wobei der Modem (36) eine Bitfehlerrate aus einer empfangenen Dotting-Sequenz berechnet und mehrere Protokolle unterstützt und mit einem zellularen Kommunikationssystem (20, 22, 24) verbunden ist, wobei das zellulare Kommunikationssystem eine Anzeige der empfangenen Signalstärke und einen gesendeten Dienstzugriffston enthält, die zur Steuerungen von Kommunikationssitzungen im zellularen Kommunikationssystem verwendet werden, wobei das Verfahren die folgenden Schritte umfasst:
Einleiten von Kommunikationsvorgängen durch das zellulare Kommunikationssystem (20, 22, 24);
Feststellen der Kanalqualität im zellularen Kommunikationssystem (20, 22, 24) unter Verwendung der berechneten Bitfehlerrate in Verbindung mit der Anzeige der empfangenen Signale und einer Amplitude und einer Verzerrung des Dienstzugriffstons vor der Einrichtung von Kommunikationsvorgängen unter Verwendung von irgendeinem der mehreren Protokolle;
Auswählen eines bestimmten der mehreren Protokolle auf die festgestellte Kanalqualität hin; und
Einrichten von Kommunikationsvorgängen durch das zellulare Kommunikationssystem (20, 22, 24), wobei nur das ausgewählte Protokoll verwendet wird, so dass nicht erfolgreiche Versuche zur Einrichtung einer Kommunikation unter Verwendung der anderen Protokolle ausgeschlossen werden.

2. System zur automatischen Modem-Protokoll-Auswahl zur Verwendung in einem verteilten Datenverarbeitungssystem (10) mit einem Modem (36), der eine Bitfehlerrate aus einer empfangenen Dotting-Sequenz berechnet und mehrere mit einem zellularen Kommunikationssystem (20, 22, 24) verbundene Protokolle unterstützt, wobei das zellulare Kommunikationssystem eine Anzeige der empfangenen Signalstärke und einen gesendeten Dienstzugriffston enthält, die zur Steuerungen von Kommunikationssitzungen im zellularen Kommunikationssystem verwendet werden, wobei das System zur automatischen Modem-Protokoll-Auswahl Folgendes umfasst:
Mittel zum Einleiten von Kommunikationsvorgängen durch das zellulare Kommunikationssystem (20, 22, 24
Mittel zum Feststellen der Kanalqualität im zellularen Kommunikationssystem (20, 22, 24) unter Verwendung der berechneten Bitfehlerrate in Verbindung mit der Anzeige der empfangenen Signalstärke und einer Amplitude und einer Verzerrung des Dienstzugriffstons vor der Einrichtung von Kommunikationsvorgängen unter Verwendung von irgendeinem der mehreren Protokolle;
Mittel zum Auswählen eines bestimmten der mehreren Protokolle auf die festgestellte Kanalqualität hin; und Mittel zum Einrichten von Kommunikationsvorgängen durch das zellulare Kommunikationssystem (20, 22, 24), wobei nur das ausgewählte Protokoll verwendet wird, so dass nicht erfolgreiche Versuche zur Einrichtung einer Kommunikation unter Verwendung der anderen Protokolle ausgeschlossen werden.

## Revendications

1. Procédé destiné à une sélection automatique d'un protocole de modulateur -démodulateur (modem) dans un système de traitement de données réparti (10) dans lequel ledit modem (36) calcule un taux d'erreur binaire à partir d'une séquence de tonalités reçue et, accepte des protocoles multiples et est relié à un système de communication cellulaire (20, 22, 24), ledit système de communication cellulaire comprenant un indicateur d'intensité de signal reçu et une tonalité d'accès au service transmise qui sont utilisés pour commander les sessions de communication à l'intérieur dudit système de communication cellulaire, ledit procédé comprenant les étapes consistant à :
- débuter des communications par l'intermédiaire dudit système de communication cellulaire (20, 22, 24),
- avant d'établir des communications en utilisant l'un quelconque desdits protocoles multiples, déterminer la qualité du canal à l'intérieur dudit système de communication cellulaire (20, 22, 24) en utilisant ledit taux calculé d'erreur binaire en combinaison avec ledit indicateur d'intensité du signal reçu et un niveau d'amplitude et de distorsion de ladite tonalité d'accès au service,
- en réponse à ladite qualité du canal déterminée, sélectionner un protocole particulier parmi lesdits protocoles multiples, et
- établir des communications par l'intermédiaire dudit système de communication cellulaire
(20, 22, 24) en utilisant uniquement ledit protocole sélectionné de sorte que des tentatives non réussies lors de l'établissement d'une communication en utilisant les autres protocoles sont éliminées.

2. Système de sélection automatique de protocole de modem destiné à être utilisé dans un système de traitement de données réparti (10) comportant un modem (36) qui calcule un taux d'erreur binaire à partir d'une séquence de tonalités reçue et qui accepte des protocoles multiples, relié à un système de communication cellulaire (20, 22, 24), ledit système de communication cellulaire comprenant un indicateur d'intensité de signal reçu et une tonalité d'accès au service transmise qui sont utilisés pour commander des sessions de communication à l'intérieur dudit système de communication cellulaire, ledit système de sélection automatique de protocole de modem comprenant :
- un moyen destiné à débuter des communications par l'intermédiaire dudit système de communication cellulaire (20, 22, 24),
- un moyen destiné à déterminer une qualité d'un canal à l'intérieur dudit système de communication cellulaire (20, 22, 24) en utilisant ledit taux d'erreur binaire calculé en combinaison avec ledit indicateur d'intensité de signal reçu et un niveau d'amplitude et de distorsion de ladite tonalité d'accès au service avant d'établir des communications en utilisant l'un quelconque desdits protocoles multiples,
- un moyen destiné à sélectionner un protocole particulier parmi lesdits protocoles multiples, en réponse à ladite qualité de canal déterminée, et
- un moyen destiné à établir des communications par l'intermédiaire dudit système de communication cellulaire (20, 22, 24) en utilisant uniquement ledit protocole sélectionné de sorte que des tentatives non réussies lors de l'établissement d'une communication en utilisant les autres protocoles sont éliminées.
